# EUROPÄISCHE PATENTSCHRIFT

(11) **EP 0 396 558 B1**
(45) Veröffentlichungstag und Bekanntmachung des Hinweises auf die Patenterteilung: **03.03.1993**
(21) Anmeldenummer: 88909518.8
(22) Anmeldetag: 10.11.1988
(51) Int. Cl.: G06F 15/50, G08G 1/09

(54) **START- UND ZIELPUNKTEINGABEN FÜR NAVIGATIONSSYSTEME**
PROCESS FOR INPUTTING STARTING AND DESTINATION POINTS INTO NAVIGATION SYSTEMS
PROCEDE POUR INTRODUIRE LES LIEUX DE DEPART ET DE DESTINATION DANS DES SYSTEMES DE NAVIGATION

(30) Priorität: 30.12.1987 DE 3744532
(43) Veröffentlichungstag der Anmeldung: 14.11.1990
(73) Patentinhaber: ROBERT BOSCH GMBH, 70442 Stuttgart (DE)
(72) Erfinder: HELLDÖRFER, Reinhard, D-8523 Igelsdorf (DE); KANZLER, Ulrich, D-8504 Stein (DE); RAUCH, Hans, D-8510 Fürth (DE); HARTMANN, Stefan, D-8500 Nürnberg (DE)
(86) Internationale Anmeldenummer: DE8800698
(87) Internationale Veröffentlichungsnummer: WO8906399

(56) Entgegenhaltungen:
- WO-A-86/07142
- DE-C- 3 114 908
- DE-C- 3 511 960
- US-A- 4 550 317
- US-A- 4 631 678
- US-A- 4 646 089

## Beschreibung

### Stand der Technik

Die Erfindung geht aus von einem Verfahren zur Eingabe von Start- und Zielpunkten in elektronischen Navigationssystemen von Fahrzeugen nach dem Oberbegriff des Patentanspruchs 1.

Bei einem Navigationssystem mit der Bezeichnung TRAVELPILOT ist es gemäß Prospektblatt BP-VFW/8699901010 der Blaupunkt-Werke GmbH bekannt, während der Navigationsfahrt den jeweiligen Straßenplan mit dem augenblicklichen Standort des Fahrzeugs auf einem Monitor darzustellen. Für die Zieleingabe wird vor der Navigationsfahrt über Tasten der Straßenname oder ein markantes Ziel, wie beispielsweise Bahnhof oder Flughafen eingegeben. Diese im Datenspeicher des Navigationssystems enthaltenen Zielvorgaben werden dann im Straßenplan auf dem Monitor durch eine Markierung kenntlich gemacht. Während der Navigationsfahrt wird mit Hilfe der Koppelnavigation der jeweilige Ort des Fahrzeugs auf dem Straßenplan nachgeführt. Als zusätzliche Information wird die jeweils verbleibende Luftlinienentfernung zum Ziel auf dem Monitor eingeblendet.

Dieses System hat den Nachteil, daß der Datenspeicher des Navigationssystems nicht umfangreich genug ist, um sämtliche, für die Navigation benötigten Straßenplandaten aufnehmen zu können. So ist es nicht möglich, als Start- oder Zieladresse ein beliebiges Haus von den Häusern einer Straße einzugeben, da nur eine begrenzte Zahl markanter Gebäude bzw. Gebäudekomplexe als mögliche Zielpunkte im Datenspeicher des Straßenplanes abgelegt sind. Mit diesem Navigationssystem wird der Fahrer des Fahrzeugs daher in den meisten Fällen nur bis zu der als Ziel eingegebenen Straße herangeführt, so daß er sich den Zielpunkt an der Straße, d. h. ein Gebäude mit einer bestimmten Hausnummer noch suchen muß.

Bei einem anderen, aus der WO 86/01442 bekannten Verfahren zur Eingabe und Speicherung von Standorten und Zielen in einem Navigations-Datenspeicher werden von beliebigen Karten die Polarkoordinaten der Start- und Zielpunkte mit einem besonderen Meßgerät ermittelt und gemeinsam mit dem Maßstab der Karte über Tasten und Display-Anzeigen in den entsprechenden Speicher des Navigationsrechners eingegeben. Während der Navigationsfahrt wird dann durch Koppelnavigation jeweils die Richtung und Entfernung des aufgerufenen Zielpunktes angezeigt. Diese Lösung hat den Nachteil, daß bei der Ermittlung und der Eingabe von Start- und Zielpunkten mittels ihrer Polarkoordinaten sehr sorgfältig vorgegangen werden muß. Da bei den Zieleingaben außerdem jeweilige genaue Adresse, d. h. Straße und Hausnummer, aus den Stadtplänen oftmals gar nicht oder nur durch Schätzung zu entnehmen ist, können derartige Ziele weder genau eingegeben noch durch Koppelnavigation genau angefahren werden.

Mit der vorliegenden Erfindung wird angestrebt, bei Navigationssystemen für Fahrzeuge, bei denen mit Hausnummern versehene Straßenstützpunkte von Straßennetzabbildungen in einem Datenspeicher abgelegt sind, Navigationsfahrten durch Aufrufen von Straße und Hausnummer der Start- und Zielpunkte zu erleichtern.

Das erfindungsgemäße Verfahren mit den kennzeichnenden Merkmalen des Patentanspruchs 1 hat den Vorteil, daß unter Berücksichtigung von Datenschutzbestimmungen aus artfremden Datenbeständen relevante, mit Hausnummern versehene Stützpunkte von Straßen einer Straßennetzabbildung im Datenspeicher zur Verfügung stehen, die bei der Eingabe von Start- und Zieladressen zur möglichst genauen Bestimmung des Start- und Zielpunktes einer Navigationsfahrt verwenden werden. Als weiterer Vorteil dieses Verfahrens ist anzusehen, daß der Speicherumfang für den Datenspeicher des Navigationssystems durch die Speicherung einzelner Stützpunkte der Straße gegenüber der Speicherung aller Gebäude der Straße mit ihren Hausnummern erheblich reduziert werden kann. Dadurch ist es möglich, ganze Stadtpläne von Großstädten im Navigationssystem elektronisch zu speichern.

Durch die in den Unteransprüchen angeführten Maßnahmen ergeben sich vorteilhafte Weiterbildungen und Verbesserungen der im Patentanspruch 1 angegebenen Merkmale.

### Zeichnung

Ein Ausführungsbeispiel der Erfindung ist in der Zeichnung dargestellt und in der nachfolgenden Beschreibung näher erläutert. Es zeigen:
Figur 1 ein Flußdiagramm über den Verfahrensablauf zur Gewinnung der relevanten Daten eines Straßenzuges,
Figur 2 ein Flußdiagramm über Aufruf von Zwischenspeicherung der Daten einer Straße,
Figur 3 die Abbildung einer Straße mit Häuserschwerpunkten als Stützpunkte der Straße,
Figur 4 ein Flußdiagramm für die Mittelung dicht nebeneinander liegender Stützpunkte der Straße,
Figur 5 die Stützpunkte der Straße aus Figur 3 mit einem umfassenden Rechteck, aufgeglidert in Unterrechtecke,
Figur 6 eine verringerte Zahl von Stützpunkten der Straße aus Figur 3 mit vergrößerten Unterrechtecken,.
Figur 7 die durch zweifache Mittelung übriggebliebenen Stützpunkte der Straße nach Figur 3,
Figur 8 ein Flußdiagramm zur Linearisierung der Straßenabbildung,
Figuren 9 bis 15 die Darstellung der Straßenstützpunkte mit einzelnen Abschnitten der Linearisierung,
Figur 16 die Straßenabbildung durch einen Polygonzug nach der Linearisierung,
Figur 17 ein Flußdiagramm zur Glättung der Straßenabbildung,
Figur 18 das Blockschaltbild eines Navigationssystems im Kraftfahrzeug,
Figuren 19 und 20 Flußdiagramme für Start- und Zieleingabe in das Navigationssystem.

### Beschreibung des Auführungsbeispiels

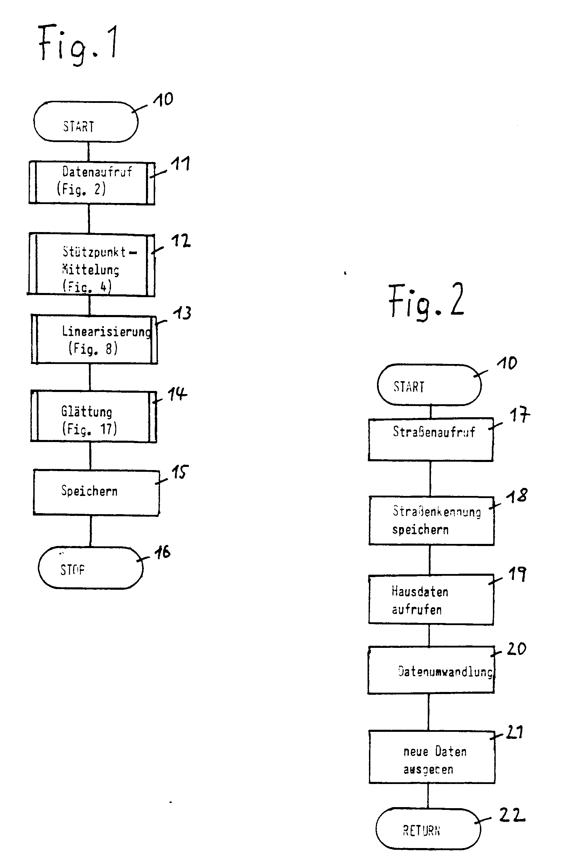

In Figur 1 ist ein Flußdiagramm dargestellt, welches den Verfahrensablauf zur Gewinnung der relevanten Daten für eine Straße aus einem artfremden Datenbestand eines Vermessungsamtes zeigt, welches die Schwerpunktkoordinaten der Häuser an der ausgewählten Straße enthält. Dabei wird davon ausgegangen, daß zur Navigation nach Stadtplandaten eine Datenbasis notwendig ist, in welcher ein möglichst einfaches Abbild des Stadtplanes enthalten sein sollte. Die Daten müssen in einer für das Navigationssystem verständlichen Form vorliegen und leicht zu behandeln sein. Es werden für jede einzelne Straße Informationen benötigt, aus denen der Verlauf der Straße, ihre geographische Lage sowie Informationen über die Verteilung der Hausnummern entlang der Straße in geeigneter Form hervorgehen.

Die Informationen über die in der Straße vorhandenen Hausnummern sollen einen Rückschluß auf die Lage einer bestimmten Nummer innerhalb der Straße zulassen. Bei kurzen Straßen oder Plätzen ist die Hausnummer grundsätzlich von geringerer Bedeutung, da es hier nur darauf ankommen kann, die Straße oder den Platz überhaupt zu finden. Größere Wichtigkeit kommt der Hausnummer aber dann zu, wenn in Straßen mit großer flächenhafter Ausdehnung ein bestimmter Punkt angefahren werden soll. Da in fast allen deutschen Vermessungsämtern für die von ihnen betreuten Gebiete Datensammlungen über die Grundstücks- und Häuserschwerpunkte vorliegen, sind diese zur Gewinnung der relevanten Daten von Straßennetzabbildungen zu Navigations-zwecken besonders geeignet. Für jede der Straßen in der Straßennetzabbildung werden in einer elektronischen Datenverarbeitungsanlage die in Figur 1 dargestellten und weiter unten näher beschriebenen Verfahrensabschnitte nacheinander abgearbeitet.

Nach dem Start 10 werden in einem ersten Verfahrensabschnitt 11 für eine ausgewählte Straße die Schwerpunkte der an dieser Straße liegenden Häuser aus der artfremden Datensammlung aufgerufen und zwischengespeichert. Im Verfahrensabschnitt 12 werden dicht beieinanderliegende Häuserschwerpunkte zu einem gemeinsamen Schwerpunkt gemittelt, so daß ein Teil der ursprünglichen Daten entfällt. Im Verfahrensabschnitt 13 wird der gesamte Straßenzug in eine oder in mehrere gerade Teilstrecken so weit linearisiert, daß sämtliche Häuser innerhalb einer vorgegebenen Bandbreite neben dem linearisierten Verlauf des Straßenzuges liegen. Die Anfangs- und Endpunkte der geraden Teilstrecken werden zwischengespeichert und die übrigen, dazwischenliegenden Punkte entfallen. Im Verfahrensabschnitt 14 werden jeweils zwei aufeinanderfolgende linearisierte Teilstrecken nur dann zu einer gemeinsamen neuen Teilstrecke geglättet, wenn diese neue Teilstrecke, die zwischen den zwei Endpunkten zweier benachbarter bisheriger Teilstrecken liegt, von ihrem gemeinsamen, dazwischenliegenden Punkt einen vorgegebenen Abstand nicht überschreitet. In diesem Fall wird auch der zwischen diesen zwei hintereinanderliegenden Teilstrecken befindliche Punkt gelöscht. Im Verfahrensabschnitt 15 werden nun die übriggebliebenen Stützpunkte mit ihren Koordinaten und den ihnen zugeordneten Hausnummern mitsamt der Kennung der Straße in den Datenspeicher der Navigationseinrichtung abgespeichert. Im Schritt 16 wird das Programm gestoppt. Das gleiche wiederholt sich nunmehr für jede weitere Straße der Straßennetzabbildung, bis sämtliche Straßen erfaßt und die zu ihrer Abbildung relevanten Daten im Datenspeicher abgelegt sind.

Mit Hilfe der folgenden Figuren sollen nunmehr aus einer Datensammlung mit den Schwerpunktkoordinaten von Häusern die einzelnen Verfahrensabschnitte aus Figur 1 näher erläutert werden. Figur 2 zeigt ein Flußdiagramm für den Aufruf der Häuser-Schwerpunktkoordinaten, deren Umrechnung in aufsteigender Folge der Hausnummern und deren Zwischenspeicherung. Nach dem Start 10 wird zunächst im Schritt 17 aus dem artfremden Datenbestand eine Straße aus der zu speichernden Straßennetzabbildung ausgewählt. Diese Straße wird nun mit einer Kennung, z. B. einer vierstelligen Zahl, versehen, die später in einem Straßenverzeichnis der Straßennetzabbildung für Start- und Zieleingaben bei Navigationsfahrten aufgenommen wird. Die Kennung, die sich mit jeder neu aufgerufenen Strafe erhöht, wird nun im Schritt 18 für die ausgewählte Straße zwischengespeichert. Im Schritt 19 werden dann die Daten der Häuser dieser Straße nacheinander mit aufsteigender Hausnummer aus dem Datenbestand aufgerufen. Dabei werden für jedes Haus drei Datenblöcke zwischengespeichert, wobei der erste Block eine dreistellige Hausnummer enthält. Der zweite Block enthält die X-Koordinate der Hausschwerpunkte und der dritte Block die Y-Koordinate. Da die Koordinatenwerte z. B. in bekannter Weise als Gauß-Krüger-Koordinaten in einem rechtwinkligen Koordinatensystem mit dem Äquator als Bezugsachse vorliegen und sehr viel Speicherplatz erfordern, werden diese Koordinaten im Schritt 20 auf ein Koordinatensystem mit einem Bezugspunkt innerhalb der Straßennetzabbildung, z. B. der linken unteren Ecke der Straßennetzabbildung umgerechnet. Die so umgewandelten Schwerpunktskoordinaten der Häuser benötigen nun wesentlich weniger Speicherplatz. Dabei ist die Umrechnung dann besonders einfach durchzuführen, wenn der neue Bezugspunkt ebenfalls mit seinen Gauß-Krüger-Koordinaten aus dem Datenmaterial zu entnehmen ist. In diesem Fall wird jeweils die Differenz der X- und Y-Koordinaten der Häuserschwerpunkte zum neuen Bezugspunkt gebildet. Im Schritt 21 werden nunmehr die so gewonnenen Daten aller Häuser der aufgerufenen Straße mit der Hausnummer als sogenannte Stützpunkte der Straße zwischengespeichert.

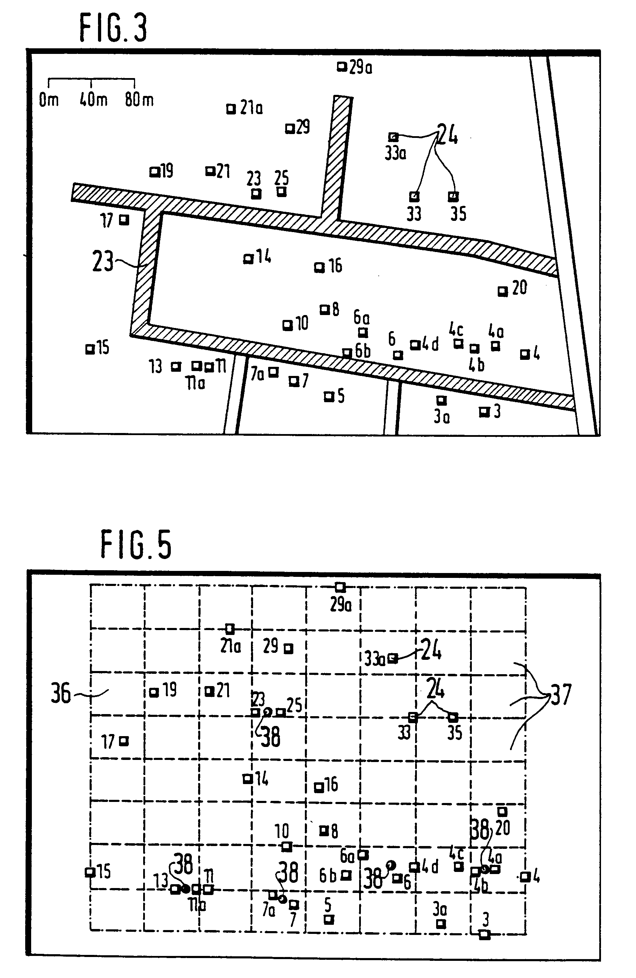

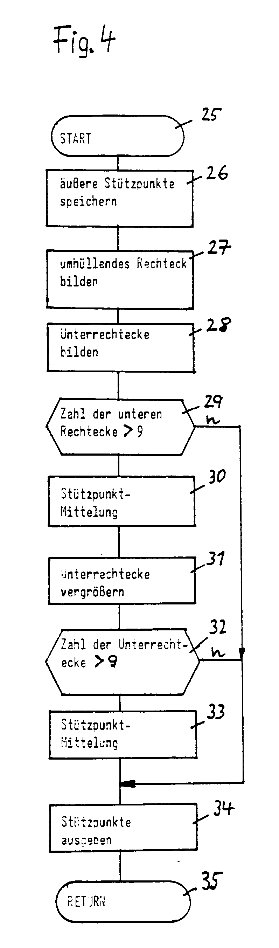

In Figur 3 ist der Verlauf einer Straße 23 mit davon abzweigenden Sackgassen in einem begrenzten Gebiet der zu speichernden Straßennetzabbildung dargestellt. Außerdem sind dort alle im Verfahrensabschnitt nach Figur 2 zwischengespeicherten Stützpunkte 24 mit ihren Hausnummern dargestellt, aus denen mit dem Verfahren nach Figur 1 die relevanten Daten zu Straßennetzabbildung gewonnen werden sollen. Dabei ist zu beachten, daß außer der Anzahl der Stützpunkte 24 mit ihren Koordinaten keine weiteren Informationen über die Straße zur Verfügung stehen. Der eingezeichnete, tatsächliche Straßenverlauf ist aus der artfremden Datensammlung nicht zu entnehmen. Er kann aus der Lage der Häuserschwerpunkte und der Verteilung der Hausnummern höchstens erahnt werden.

Figur 4 zeigt ein Flußdiagramm, mit dem durch eine Mittelung der Schwerpunkte nahe nebeneinanderliegender Häuser die Anzahl der Stützpunkte für die Straße reduziert wird. Nach dem Start 25 dieses Programmabschnittes 12 aus Figur 1 werden zunächst diejenigen Stützpunkte 24 der Straße im Schritt 26 erfaßt und zwischengespeichert, die am weitesten außen liegen. Mit diesen Stützpunkten wird dann im Schritt 27 ein Rechteck gebildet, in dem die X- oder Y-Koordinaten dieser Stützpunkte zu den Eckpunkt-Koordinaten des Rechteckes zusammengefaßt werden. In Figur 5 ist dieses Rechteck, welches alle Stützpunkte 24 der Straße erfaßt, mit 36 bezeichnet. Im Schritt 28 nach Figur 4 wird nun das durch die zwischengespeicherten Eckpunkte vorgegebenen Rechteck 36 in eine Vielzahl von Unterrechtecken 37 aufgeteilt. Die Anzahl der Unterrechtecke 37 wird dabei durch die Anzahl der Stützpunkte 24 je Straße bestimmt. Dabei hat es sich als zweckmäßig erwiesen, für die Zahl der Unterrechtecke 37 pro Rechteckseite die Anzahl der Stützpunkte 24 durch die Zahl 4 zu teilen und das Ergebnis auf- oder abzurunden

In Figur 5 ist diese Unterteilung für die Straße nach Figur 3 dargestellt. In diesem Beispielsfall ergibt sich bei insgesamt 33 Stützpunkten der Straße eine Unterteilung des Rechteckes 36 in 8 x 8 Unterrechtecke 37. Auch diese Unterrechtecke 37 werden mit ihren Eckpunktkoordinaten zunächst zwischengespeichert. Eine derartige Unterteilung soll jedoch nur bei Strafen durchgeführt werden, die eine Mindestzahl von Häusern, z. B. mindestens 14 Häuser haben. Im Schritt 29 des Flußdiagramms aus Figur 4 wird daher geprüft, ob das Rechteck 36 im vorhergehenden Schritt 28 in mehr als neun Unterrechtecke 37 aufgeteilt wurde. Da dies für den vorliegenden Beispielsfall zutrifft, werden im Schritt 30 alle Unterrechtecke 37 nacheinander daraufhin überprüft, ob in einem oder mehreren der Unterrechtecke 37 zwei oder mehr Stützpunkte 24 liegen. Ist dies der Fall, so werden die Koordinaten der betroffenen Stützpunkte 24 eines solchen Unterrechteckes im Schritt 30 gemittelt und daraus ein Schwerpunkt gebildet, dem eine der Hausnummern der gemittelten Stützpunkte 24 zugeordnet und diese sodann mit den Koordinaten des Schwerpunktes zwischengespeichert wird. Die bisherigen Stützpunkte in diesem Unterrechteck können jetzt gelöscht werden. Dabei ist es gegebenenfalls zweckmäßig, dem Schwerpunkt die Hausnummer des ihm am nächsten liegenden Stützpunktes 24 zuzuordnen.

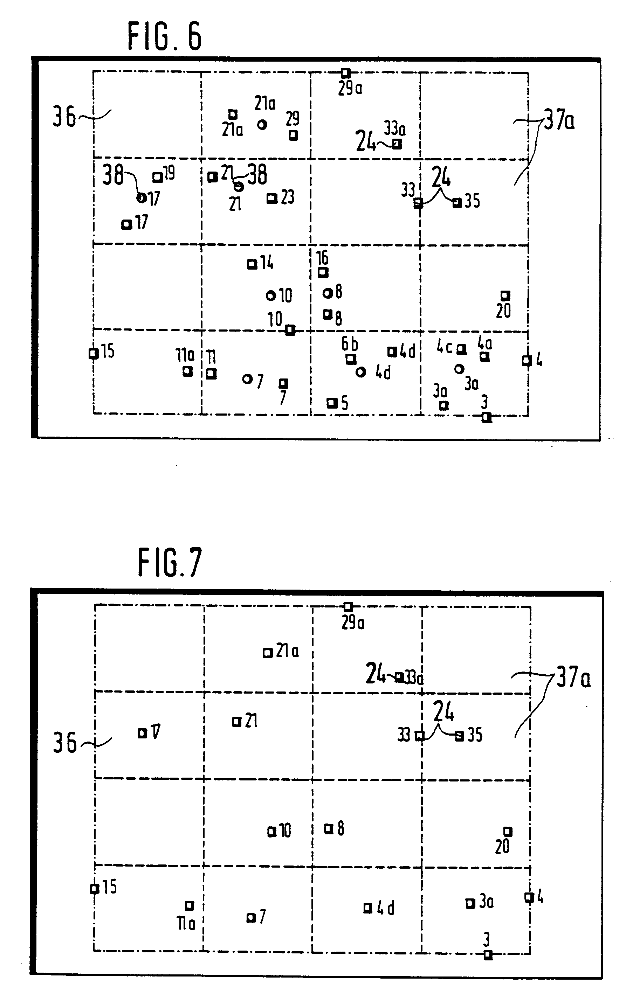

Im Beispielsfall nach Figur 5 wurden im Schritt 30 in fünf der Unterrechtecke 37 durch Mittelung fünf Schwerpunkte 38 gebildet und abgespeichert, wodurch sechs Stützpunkte 24 gelöscht werden können. Im Schritt 31 wird nun die Zahl der Unterrechtecke je Rechteckseite halbiert, d. h. daß die Fläche der Unterrechtecke um das Vierfache vergrößert wird. In Figur 6 ist dargestellt, daß nunmehr das Rechteck 36 auf 4 x 4 Unterrechtecke 37a aufgeteilt wurde. Im Schritt 32 des Flußdiagramms nach Figur 4 wird nun ein weiteres Mal geprüft, ob die Anzahl der so gebildeten Unterrechtecke 37a über der Zahl von neun Unterrechtecken liegt. Da dies im Beispielsfall so ist, werden im Schritt 33 nunmehr alle vergrößerten Unterrechtecke 37a nacheinander daraufhin überprüft, ob mehr als zwei Stützpunkte 24 in einem oder mehreren der Unterrechtecke 37a liegen. Dabei werden die im Schritt 26 erfaßten äußeren Stützpunkte nicht berücksichtigt. Im Schritt 33 wird nunmehr erneut eine Mittelung der Koordinaten aller Stützpunkte 24 vorgenommen, die von einem Unterrechteck 37a eingefaßt sind. Durch diese Mittelung werden gemäß Figur 6 acht weitere Schwerpunkte 38 gebildet, denen im Beispielsfall jeweils die kleinste Hausnummer der zusammengefaßten Stützpunkte des jeweiligen Unterrechtecks 37a zugeordnet wird. Diese Schwerpunkte 38 werden mit den ihnen zugeordneten Hausnummern und Koordinaten als neue Stützpunkte zwischengespeichert, und die bisherigen Stützpunkte 17 der betroffenen Unterrechtecke 37a können gelöscht werden. Figur 7 zeigt die relativ gleichmäßige neue Stützpunktverteilung nach zweimaliger Mittelung. Die übriggebliebenen ursprünglichen Stützpunkte 24 sowie die durch Mittelung gewonnenen Schwerpunkte werden nun gemeinsam als Stützpunkte der Straße mit ihren Koordinaten, den ihnen zugeordneten Hausnummern sowie der Straßenkennung im Schritt 34 in einem Datenspeicher abgelegt; und zwar zusammen mit den im Schritt 26 gewonnenen vier äußeren Stützpunkten der Straße, die bei der Ermittelung im Schritt 30 und 33 außer Betracht geblieben sind. Auf diese Weise lassen sich unter Berücksichtigung von Datenschutzbestimmungen aus einer artfremden Datensammlung mit den Häuserschwerpunkten einer Straße relevante Daten für die Straße gewinnen, mit denen es möglich ist, durch Eingabe einer Start- und Zieladresse mit Benennung von Straßenkennung und Hausnummer in einem System mit einer Koppelnavigation zielgenaue Navigationsfahrten durchzuführen. Der Speicherbedarf im Datenspeicher des Navigationssystems ist hierbei gegenüber dem Speicherbedarf in der artfremden Datensammlung erheblich reduziert.

Bei der Ermittelung von Stützpunkten nach dem Verfahrensabschnitt gemäß Figur 4 ist es wichtig, daß die Anzahl der Unterrechtecke bei der ersten Unterteilung des alle Stützpunkte umfassenden Rechteckes 36 von der Anzahl der Stützpunkte 24 der Straße abhängig gemacht wird. Bei relativ gleichmäßiger Verteilung der Häuser entlang der Straße kann es sein, daß im Schritt 30 kein Unterrechteck 37 gefunden wird, welches mehr als einen Stützpunkt 24 enthält. In diesem Fall wird unmittelbar die Vergrößerung der Unterrechtecke 37 gemäß dem Schritt 31 durchgeführt. Diese Verfahrensschritte werden folglich so lange wiederholt, bis eine Schwerpunktbildung durchgeführt wird oder bis sich die Zahl der Unterrechtecke auf neun reduziert hat. Ist dies bereits im Schritt 29 der Fall, wird keine Mittelung durchgeführt. Das Programm springt dann gleich auf Schritt 34.

Um Beginn und Ende der Straße auffinden zu können, werden im Schritt 34 des Flußdiagrammes in Figur 4 auch noch die Stützpunkte 24 mit der höchsten und mit der kleinsten Hausnummer als feste Stützpunkte der Straße mit ihren Koordinaten zur Weiterverarbeitung gespeichert oder als relevante Daten der Straße im Datenspeicher abgelegt. Im Beispielsfall wurde die Zahl der Stützpunkte 24 durch die Mittelung von 33 auf 17 reduziert.

In Abänderung des Flußdiagramms nach Figur 4 ist es gegebenenfalls zweckmäßig, daß in den Schritten 26 - 34 zunächst nur die Stützpunkte mit geraden Hausnummern aufgerufen, zwischengespeichert, in Unterrechtecken gegebenenfalls zu Schwerpunkten zusammengezogen und mit den ihnen zugeordneten Hausnummern abgespeichert werden. Danach werden dann die gleichen Verfahrensschritte mit den Stützpunkten der Straße durchgeführt, die eine ungerade Hausnummer tragen. Dabei kann selbstverständlich der Verfahrensablauf auch umgekehrt zunächst mit den ungeraden Hausnummern und anschließend mit den geraden Hausnummern durchgeführt werden. Bei der Bildung der Unterrechtecke 37, 37a ist die Anzahl der Stützpunkte einer Straße maßgebend. Für die Anzahl der zu bildenden Unterrechtecke 37 je Rechteckseite des die Stützpunkte 24 umfassenden Rechtecks 36 sollte die Zahl der Stützpunkte 24 durch ein ganzzahliges Vielfaches von 1 geteilt werden. Bei einer geringen Anzahl von Stützpunkten wäre sie durch 2 oder durch 3 zu teilen. Bei einer sehr großen Anzahl von Häuserstützpunkten ist es vorteilhaft, die Vergrößerung der Unterrechtecke 37 sowie die Mittelung und Zwischenspeicherung gemäß Schritt 30 und 33 aus dem Flußdiagramm nach Figur 4 mehrfach zu wiederholen, bis für jede Straße 3 x 3 Unterrechtecke erreicht sind.

Sollten bei einer Straße relativ wenige Häuserschwerpunkte als Stützpunkte vorhanden sein, so ist es vorteilhaft, bei der Bildung der Unterrechtecke 37 die Zahl der Unterrechtecke je Rechteckseite so groß zu wählen, daß in keinem der Unterrechtecke mehr als ein Stützpunkt liegt. Danach können dann die Unterrechtecke so weit vergrößert werden, bis in einem der Rechtecke zwei Stützpunkte auftreten, aus denen nun durch Mittelung ein neuer Schwerpunkt gebildet wird. Nach dieser ersten Schwerpunktbildung werden nun die Unterrechtecke wiederum so weit vergrößert, bis in einem weiteren Unterrechteck zwei Stützpunkte liegen. Auch diese werden nun durch Mittelung zu einem weiteren Schwerpunkt zusammengefaßt und zwischengespeichert, falls die Mindestzahl von neun Unterrechtecken noch nicht erreicht ist. Die Vergrößerung der Unterrechtecke kann zwar mehrfach wiederholt werden. Um jedoch dadurch keine zu große Verzerrung der Stützpunkte zu bekommen, sollte die Mittelung und Schwerpunktsbildung auf maximal zwei Durchläufe beschränkt werden.

Eine weitere Reduzierung der Stützpunkte einer Straße wird durch eine Linearisierung des Straßenzuges erzielt, die im Abschnitt 13 des Flußdiagramms nach Figur 1 durchgeführt wird. Dieser Verfahrensabschnitt schließt sich an das Verfahren zur Mittelung und Schwerpunktbildung nach Figur 4 an. Bei der Linearisierung sollen die im vorherigen Verfahrensabschnitt gewonnenen Stützpunkte der Straße weiter reduziert werden. Dabei denkt man sich zunächst die vorhandenen Stützpunkte in aufsteigender oder absteigender Folge der ihnen zugeordneten Hausnummern durch einen Polygonzug miteinander verbunden, der dann durch einen einfacheren ersetzt wird. Dieser einfachere Polygonzug wird dann darauf untersucht, ob er den vorgegebenen Polygonzug der vorhandenen Stützpunkte hinreichend genau beschreibt. Ist dies der Fall, so wird direkt der einfache Polygonzug, d. h. die durch ihn verbundenen Stützpunkte verwendet und die übrigen Stützpunkte werden ausgeblendet. Liegen dagegen Stützpunkte zu weit neben diesem vereinfachten Polygonzug, so wird dieser erweitert und erneut mit den Stützstellen verglichen.

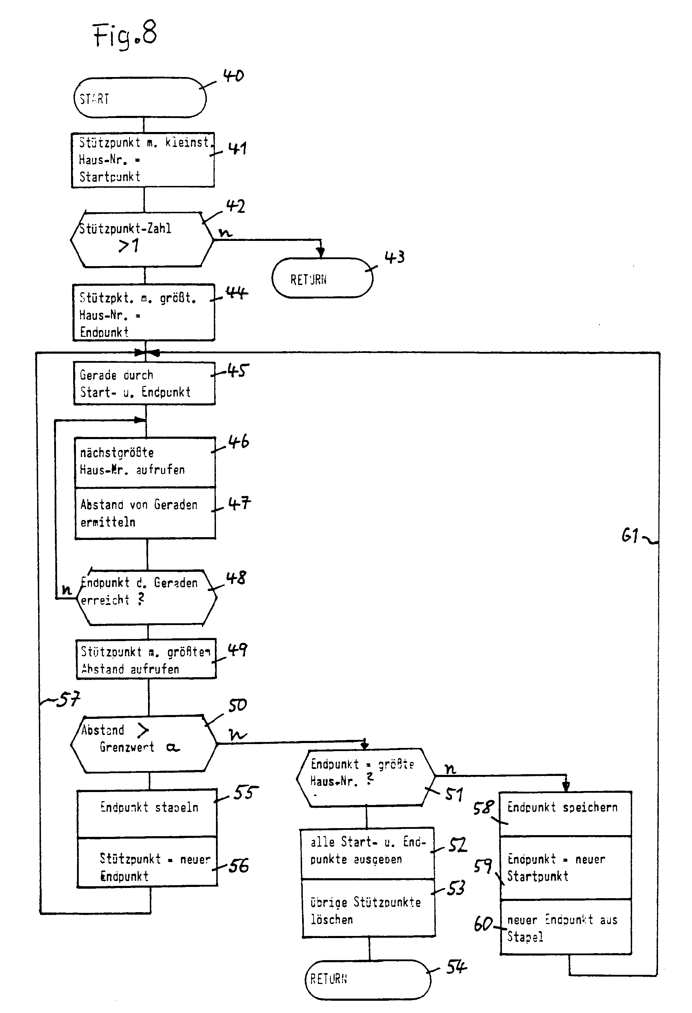

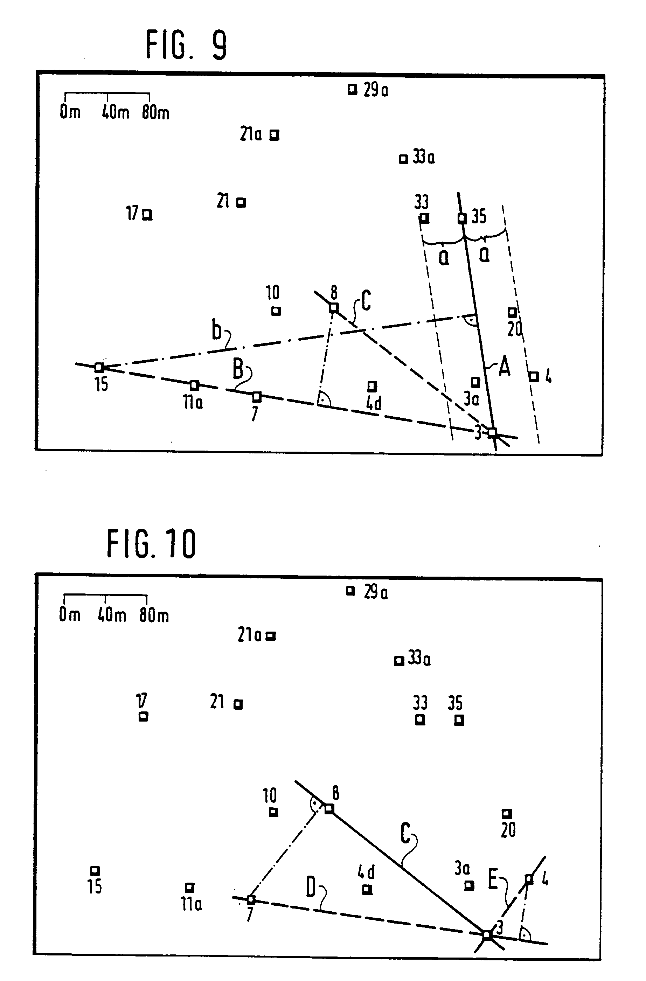

Figur 8 zeigt in einem Flußdiagramm den Verfahrensabschnitt zur Linearisierung der Straßenabbildung aufgrund der in Figur 7 gewonnenen Stützpunkte 24 der Straße 23 aus Figur 3. Nach dem Start 40 wird zunächst von den vorhandenen Stützpunkten 24 der Straße der Stützpunkt mit der kleinsten Hausnummer im Schritt 41 aufgerufen und als Startpunkt gespeichert. Im Schritt 42 wird geprüft, ob für die aufgerufene Straße mehrere Stützpunkte vorhanden sind. Ist dies nicht der Fall, so muß es sich um einen Platz oder um eine sehr kurze Straße handeln, die nur durch ein Haus gekennzeichnet ist. Dieser Stützpunkt wird dann als einziger Stützpunkt der Straße im Datenspeicher abgelegt und das Programm springt im Schritt 43 zurück in das Hauptprogramm. Sind - wie im vorliegenden Fall - mehrere Stützpunkte 24 vorhanden, so wird nun der Stützpunkt mit der größten Hausnummer im Schritt 44 aufgerufen und als Endpunkt zwischengespeichert. Der weitere Verfahrensabschnitt wird nun mit Hilfe der Figur 9 erläutert. Dort hat der Startpunkt die Hausnummer 3 und der Endpunkt die Hausnummer 35. Im Schritt 45 wird nun durch den Start- und Endpunkt in mathematischer Form eine Gerade A gelegt. Im nächsten Schritt 46 wird nun vom Startpunkt ausgehend der Stützpunkt mit der nächstgrößten Hausnummer aufgerufen, und im Schritt 47 wird der senkrechte Abstand dieses Stützpunktes von der Geraden A gemessen und zwischengespeichert. Im Schritt 48 wird geprüft, ob der Endpunkt der Geraden A erreicht ist. Solange dies nicht der Fall ist, wird in einer Schleife der Stützpunkt mit der nächstgrößten Hausnummer im Schritt 46 aufgerufen und erneut sein Abstand zur Geraden A im Schritt 47 gemessen und zwischengespeichert. Ist schließlich der Endpunkt auf dieser Geraden erreicht, so wird im Schritt 49 der Stützpunkt mit dem größten zwischengespeicherten Abstand zur Geraden A aufgerufen, im Beispielsfall ist dies der Stützpunkt mit der Hausnummer 15, dessen Senkrechte zur Geraden A strichpunktiert dargestellt ist. Dieser Abstand b wird nun im Schritt 50 mit einem vorgegebenen Grenzwert a verglichen, der einen Toleranzbereich links und rechts der Geraden A bildet. Dieser Grenzwert ist im Beispielsfall mit 40 m vorgegeben. Liegen alle Stützpunkte innerhalb des durch diesen Grenzwert a beschriebenen Bereiches links und rechts der Geraden A, so wird der Straßenverlauf durch diese Gerade A als hinreichend linearisiert angenommen. Im Schritt 51 wird geprüft, ob der vorliegende Endpunkt die größte Hausnummer aufweist. Wenn dies der Fall ist, werden im Schritt 52 der Start- und Endpunkt als verbleibende Stützpunkte der Straße ausgegeben, und im Schritt 53 werden alle übrigen Stützpunkte gelöscht. Das Programm springt nun im Schritt 54 in das Hauptprogramm nach Figur 1 zurück.

Im Beispielsfall nach Figur 9 ist jedoch der Abstand b des Stützpunktes mit der Hausnummer 15 größer als der vorgegebene Grenzwert a. Es wird nunmehr im Schritt 55 der bisher verwendete Endpunkt, d. h. der Stützpunkt mit der Hausnummer 35, in einen Stapel gegeben und im Schritt 56 wird der gewonnene Stützpunkt mit der Hausnummer 15 als neuer Endpunkt erfaßt, und über eine Schleife 57 werden nun die Programmschritte 45 - 50 erneut durchlaufen, wobei im Schritt 45 die Gerade B gebildet wird und im Schritt 49 der Stützpunkt mit der Hausnummer 8 als derjenige mit dem größten Abstand zur Geraden B gefunden wird. Im Schritt 50 wird erneut festgestellt, daß dieser Stützpunkt mit der Hausnummer 8 einen Abstand hat, der größer als der Grenzwert a ist. Es wird daher im Schritt 55 der bisherige Endpunkt mit der Hausnummer 15 in den Stapel gelegt, und im Schritt 56 wird der Stützpunkt mit der Hausnummer 8 als neuer Endpunkt erfaßt. Der Programmdurchlauf über die Schleife 57 kann nun erneut erfolgen.

Figur 10 zeigt, daß durch diesen erneuten Schleifendurchlauf des Programms nach Figur 8 mit der Geraden C wiederum ein Stützpunkt mit der Hausnummer 7 gefunden wird, dessen Abstand zur Geraden C größer als der vorgegebene Grenzwert a ist. Der Programmabschnitt über die Schleife 57 muß daher erneut durchlaufen werden, wobei nun die Gerade D gebildet wird. Erneut liegt nun der Abstand des Stützpunktes mit der Hausnummer 4 über dem Grenzabstand a, so daß über die Schleife 57 des Flußdiagramms nunmehr die Gerade E gebildet wird.

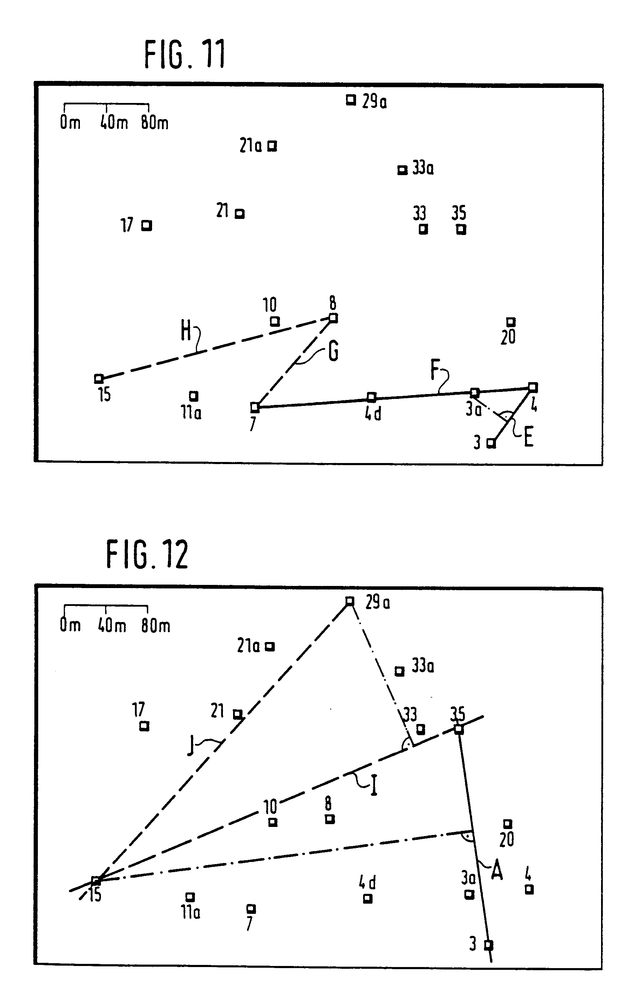

Figur 11 zeigt, daß nunmehr der verbleibende Stützpunkt mit der Hausnummer 3a zur Geraden E einen Abstand hat, der den vorgegebenen Grenzwert a nicht übersteigt. Im Schritt 51 des Flußdiagramms nach Figur 8 wird daraufhin geprüft, ob der so gefundene Endpunkt mit der Hausnummer 4 zugleich die größte Hausnummer der Straße ist. Da dies im Beispiel nicht der Fall ist, wird der so gefundene Endpunkt im Schritt 58 gespeichert, und im Schritt 59 wird nunmehr dieser gefundene Endpunkt als neuer Startpunkt gesetzt. Im Schritt 60 wird jetzt der zuletzt im Schritt 55 abgestapelte Endpunkt als neuer Endpunkt aus dem Stapel entnommen und über die Schleife 61 werden die bisherigen Verfahrensschritte 45 - 60 erneut durchgespielt. Im Beispielsfall wird dabei als neuer Endpunkt im Schritt 60 der Punkt mit der Hausnummer 7 gefunden und damit im Schritt 45 gemäß Figur 11 die Gerade F gebildet. Auch hier sind die dazwischenliegenden Stützpunkte innerhalb des Grenzwertes, so daß im Schritt 58 der Endpunkt mit der Hausnummer 7 gespeichert wird und im Schritt 59 als neuer Startpunkt gilt. Aus dem Stapel wird im Schritt 60 als neuer Endpunkt der Stützpunkt mit der Hausnummer 8 aufgerufen und damit die Gerade G gebildet. In gleicher Weise wird anschließend die Gerade H gefunden. Auch dort liegt der Stützpunkt mit der Hausnummer 11a nicht außerhalb des Grenzwertes, so daß im Schritt 58 schließlich auch die Stützpunkte mit den Hausnummern 8 und 15 gespeichert sind.

Wie Figur 12 zeigt, wird nunmehr als neuer Endpunkt im Schritt 60 des Flußdiagramms nach Figur 8 der Punkt mit der Hausnummer 35 dem Stapel entnommen, und über die Schleife 61 werden jetzt die Schritte 45 - 60 erneut so oft in der beschriebenen Weise durchlaufen, bis im Schritt 51 der Stützpunkt mit der größten Hausnummer als Endpunkt erkannt wird. Im Hinblick auf Figur 12 bedeutet dies, daß mit der Geraden I zunächst als neuer Endpunkt der Stützpunkt mit der Hausnummer 29a gefunden wird und daß dann die Gerade J zwischen dem neuen Start- und Endpunkt gebildet wird.

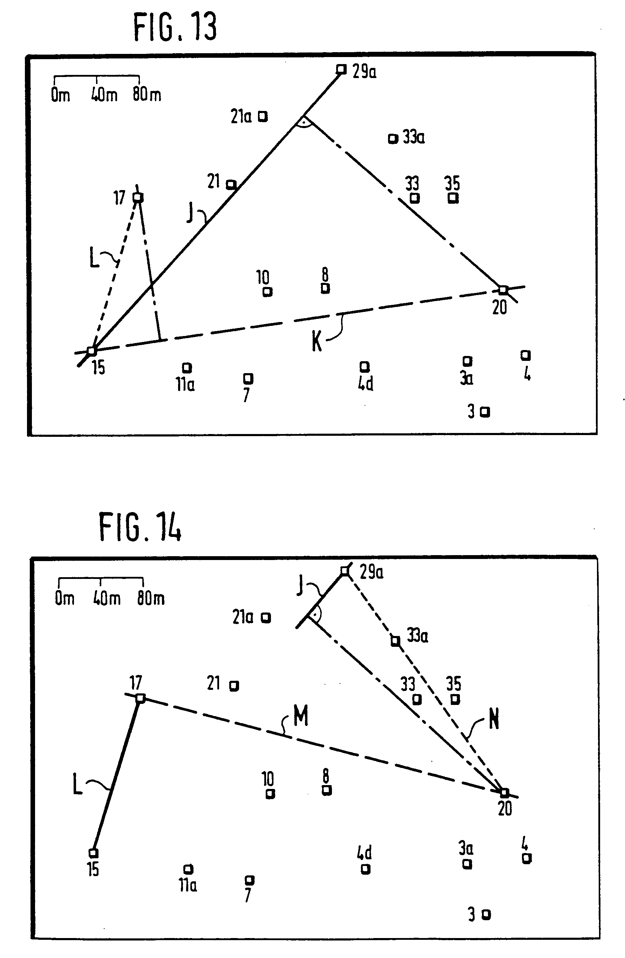

Figur 13 zeigt, daß mit Hilfe der Geraden J wiederum ein neuer Endpunkt mit der Hausnummer 20 gefunden und damit die Gerade K gebildet wird. Durch die Gerade K wird nun der Stützpunkt mit der Hausnummer 17 gefunden und damit die Gerade L gebildet. Da zwischen Start- und Endpunkt der Geraden L keine weiteren Stützpunkte liegen, wird nun im Schritt 58 des Flußdiagramms nach Figur 8 der Stützpunkt mit der Hausnummer 17 abgespeichert.

In Figur 14 ist dargestellt, daß nunmehr zwischen dem Stützpunkt mit der Hausnummer 17 und dem vom Stapel entnommenen neuen Endpunkt mit der Hausnummer 20 die Gerade M gelegt wird, daß zwischen Start- und Endpunkt dieser Geraden M keine weiteren Stützpunkte liegen, so daß im Schritt 58 nunmehr der Endpunkt mit der Hausnummer 20 gespeichert wird und mit dem dem Stapel entnommenen neuen Endpunkt mit der Hausnummer 29a die Gerade N gebildet wird.

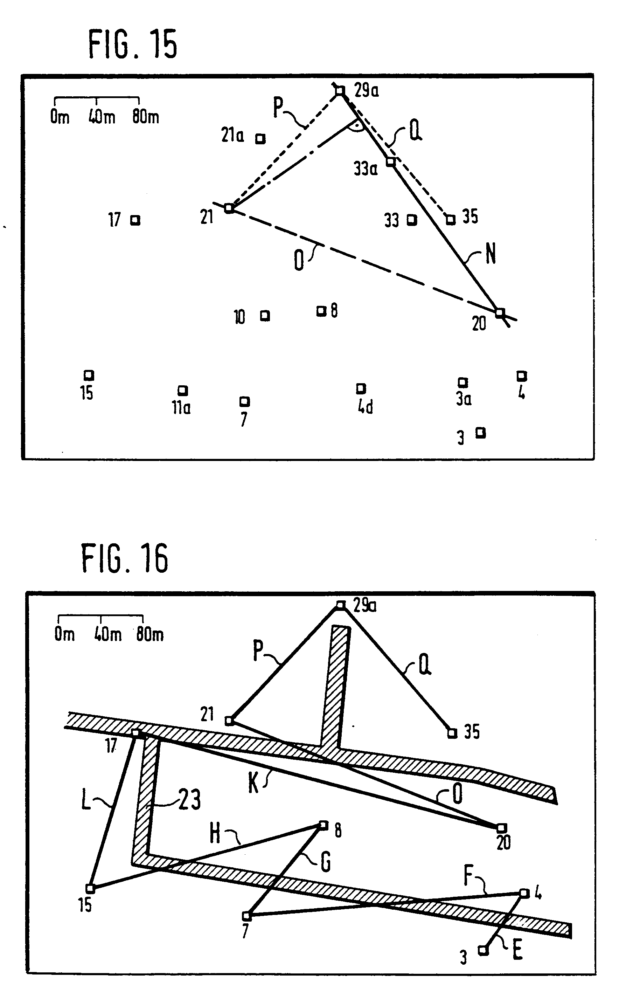

Aus Figur 15 ist erkennbar, daß über die Gerade N der außerhalb des Grenzwertes a liegende Stützpunkt mit der Hausnummer 21 als neuer Endpunkt gefunden wird, der jetzt mit dem Startpunkt die Gerade O bildet. Da zwischen Start- und Endpunkt der Geraden O keine weiteren Stützpunkte liegen, wird folglich im Schritt 58 auch der Endpunkt mit der Hausnummer 21 gespeichert und anschließend mit dem neuen Endpunkt 29a die Gerade P gebildet. Da der Stützpunkt mit der Hausnummer 21a innerhalb des Grenzwertes a von der Geraden P entfernt liegt, wird nunmehr auch der Endpunkt mit der Hausnummer 29a im Schritt 58 gespeichert. Als neuer Endpunkt wird nun im Schritt 60 der Stützpunkt mit der Hausnummer 35 vom Stapel entnommen und damit die Gerade Q gebildet. Da auch hier die dazwischenliegenden Stützpunkte den Grenzwert a nicht überschreiten, wird schließlich dieser Endpunkt im Schritt 51 als Stützpunkt mit der größten Hausnummer erkannt. Im Schritt 52 wird nunmehr der ursprüngliche Startpunkt mit der niedrigsten Hausnummer sowie alle im Schritt 58 gespeicherten Endpunkte auf einen Datenspeicher übergeben und im Schritt 53 werden alle übrigen Stützpunkte gelöscht.

Figur 16 zeigt einen auf diese Weise zwischen den verbliebenen Stützpunkten gebildeten Polygonzug mit den Teilstrecken bzw. Abschnitten der Geraden E, F, G, H, L, K, O, P, Q. Durch diesen Polygonzug wird der Verlauf der abzubildenden Straße 23 in angenäherter Form dargestellt. Im Schritt 54 des Flußdiagramms nach Figur 8 wird daher in das Hauptprogramm nach Figur 1 zurückgesprungen.

Durch dieses Verfahren wird von dem Schwerpunkt des Hauses mit der kleinsten Hausnummer und dem mit der größten Hausnummer zunächst ein gerader Straßenverlauf angenommen und geprüft, ob dieser die Positionen aller Häuserschwerpunkte hinreichend genau beschreibt. Liegen alle Punkte innerhalb des durch den vorgegebenen Grenzwert beschriebenen Bereiches links oder rechts der gebildeten Geraden, so wird der Verlauf der Straße durch diese Gerade hinreichend genau erfaßt . Werden jedoch wie im Beispiel Stützpunkte gefunden, welche einen größeren senkrechten Abstand als den vorgegebenen Grenzwert haben, muß die bisherige Gerade durch einen Polygonzug noch verbessert werden. Dazu wird der gefundene, am weitesten entfernte Stützpunkt zu dem neuen Polygonzug hinzugenommen und das Verfahren mit den dadurch entstehenden Teilstrecken bzw. Geraden wiederholt. Dabei werden jeweils nur die Stützpunkte betrachtet, welche der Hausnummer nach zwischen dem jeweiligen Start- und Endpunkt der Teilstrecken bzw. Geraden liegen. In den Figuren 9 bis 15 sind die jeweils aufeinanderfolgend gebildete Geraden kenntlich gemacht durch ausgezogene, weitgestrichelte und enggestrichelte Linien.

Der in Figur 16 dargestellte endgültige Polygonzug besitzt nun nur noch 10 Stützpunkte gegenüber Figur 9 mit 17 Stützpunkten. Dabei ist es auch möglich, eine Reduzierung der aus der artfremden Datensammlung für jede Straße vorhandenen Stützpunktdaten ohne eine Mittelung bzw. Schwerpunktbildung im Verfahrensabschnitt 12 des Hauptprogramms nach Figur 1 vorzunehmen, indem das Mittelungsverfahren nach dem Flußdiagramm aus Figur 4 überprungen wird. In gleicher Weise werden dann mit dem Flußdiagramm nach Figur 8 durch die Daten der Stützpunkte mit der höchsten und der kleinsten Hausnummer der Straße Start- und Endpunkt festgelegt, indem diese im Datenspeicher abgelegt werden und dann eine dazwischenliegende Gerade gebildet wird. Nacheinander werden dann die Koordinaten der zwischengespeicherten Stützpunkte der Straße aufgerufen und der Abstand der Stützpunkte von der Geraden ermittelt. Der größte gefundene Abstand wird mit einem vorgegebenen Grenzwert verglichen. Im Falle, daß der größte Stützpunktabstand kleiner als der Grenzwert ist, werden nur die Daten der Stützpunkte mit der größten und kleinsten Hausnummer sowie der Straßenkennung im Datenspeicher abgelegt, alle übrigen Stützpunktdaten der Straße werden dagegen unterdrückt. Für den Fall, daß der größte Stützpunktabstand größer als der Grenzwert ist, wird dieser Stützpunkt als neuer Endpunkt mit seiner Hausnummer zwischengespeichert, und zwischen ihm und dem Stützpunkt mit der kleinsten Hausnummer wird eine neue erste Gerade gebildet. Zwischen ihm und dem Stützpunkt mit der bislang höchsten Hausnummer wird eine neue zweite Gerade gebildet. Diese Verfahrensschritte werden nun für jede neue Gerade so lange wiederholt, bis alle Stützpunktabstände kleiner als der vorgegebene Grenzwert sind. Die Abstände der Stützpunkte zur jeweiligen Geraden werden dabei fortschreitend von einem Ende der Straße aus bzw. von einem Start- oder Endpunkt ermittelt.

In Abänderung des Verfahrensablaufs nach Figur 8 ist eine Linearisierung der abzubildenden Strafe mit Hilfe der vorhandenen Stützpunkte auch dadurch zu realisieren, daß ausgehend vom Startpunkt fortschreitend die Abstände der Stützpunkte zur Geraden so lange ermittelt, zwischengespeichert und mit dem jeweils vorherigen Stützpunktabstand verglichen werden, bis sich der Abstand des aktuellen Stützpunktes gegenüber dem vorherigen Stützpunkt verringert. Es wird dann der zwischengespeicherte größte Stützpunktabstand mit dem vorgegebenen Grenzwert verglichen. Im Falle, daß der Stützpunktabstand kleiner als der vorgegebene Grenzwert ist, werden die Stützpunktabstände weiter fortschreitend ermittelt und miteinander verglichen, bis nach erneutem Anstieg der Stützpunktabstände dieser wieder abnimmt. Dann wird erneut der gefundene größte Stützpunktabstand mit dem vorgegebenen Grenzwert verglichen. Sobald nun ein Stützpunktabstand gefunden wird, der größer als der vorgegebene Grenzwert ist, wird dieser als neuer Endpunkt zwischengespeichert. Die Verfahrensschritte werden jetzt so lange wiederholt, bis alle zwischen dem Startpunkt und dem neuen Endpunkt liegenden Stützpunkte einen Abstand zur Geraden aufweisen, der innerhalb des vorgegebenen Grenzwertes liegt. Der gewonnene Endpunkt wird jetzt als neuer Startpunkt gespeichert und alle dazwischenliegenden Stützpunkte werden gelöscht. Zwischen dem neuen Startpunkt und dem Endpunkt der Straße wird jetzt eine neue Gerade gebildet und die Abstände der dazwischenliegenden Stützpunkte zur neuen Gerade werden in der zuvor beschriebenen Weise erneut untereinander und mit dem vorgegebenen Grenzwert verglichen. Auf diese Weise wird der Verlauf einer Straße dadurch abgebildet, daß bei einem vorgegebenen Grenzwert von beispielsweise 50 m die im Speicher schließlich abgelegten Stützpunkte so weit durch einen Polygonzug mit geraden Abschnitten nachgebildet wird, daß die Abweichung der gefundenen Stützpunkte zum realen Straßenverlauf den Grenzwert kaum überschreitet.

Der mit dem Flußdiagramm nach Figur 8 beschriebene Verfahrensabschnitt zur Linearisierung des Straßenverlaufs kann ebenfalls getrennt voneinander durch Stützpunkte mit gerader Hausnummer und Stützpunkte mit ungerader Hausnummer durchgeführt werden. Bei Navigationsfahrten kann dadurch das Auffinden von Häusern an einer Straße mit stark unterschiedlich dichter Bebauung noch verbessert werden.

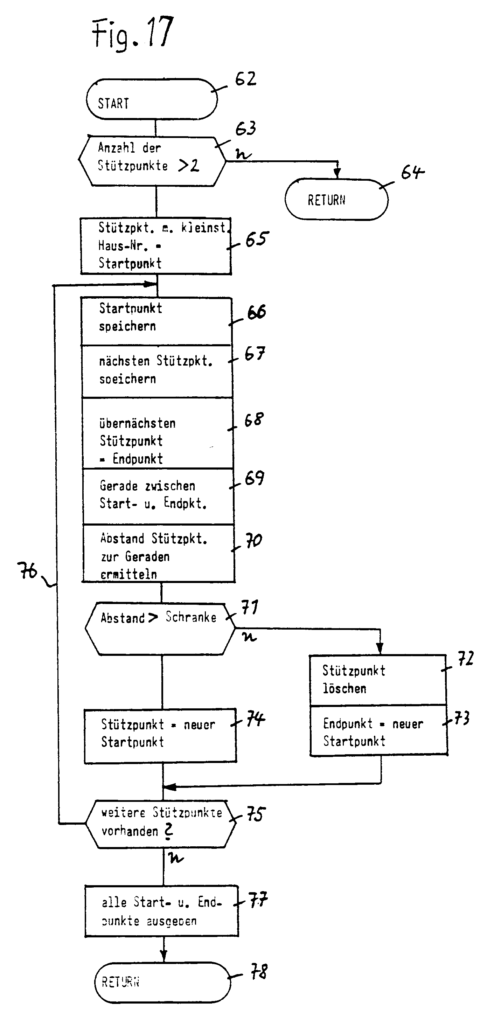

Nachdem nun die Linearisierung im Abschnitt 13 des Hauptprogramms nach Figur 1 durchlaufen ist, wird im Abschnitt 14 eine Glättung des für die Straßenabbildung gewonnenen, in Figur 16 dargestellten Polygonzuges vorgenommen. Dieser Verfahrensabschnitt wird in Figur 17 mit einem Flußdiagramm näher erläutert. Nach dem Start 62 wird zunächst im Schritt 63 geprüft, ob für die Straßenabbildung mehr als zwei Stützpunkte vorhanden sind. Ist dies nicht der Fall, läßt sich eine Linearisierung nicht durchführen, da in diesem Fall angenommen wird, daß die Straße zwischen den zwei Stützpunkten, die den Anfang und das Ende der Straße markieren, geradlinig verläuft. Es wird daher im Schritt 64 in das Hauptprogramm gemäß Figur 1 zurückgesprungen. Sind jedoch für die Straßenabbildung drei oder mehr Stützpunkte vorgesehen, so wird im Schritt 65 zunächst der Stützpunkt mit der kleinsten Hausnummer aufgerufen und als Startpunkt im Schritt 66 gespeichert. Auf der Straßenabbildung nach Figur 16 entspricht dies dem Stützpunkt mit der Hausnummer 3. Im Schritt 67 wird dann der Stützpunkt mit der nächsthöheren Hausnummer, hier mit der Hausnummer 4, aufgerufen und zwischengespeichert. Im Schritt 68 wird der übernächste Stützpunkt, hier mit der Hausnummer 7, aufgerufen und als Endpunkt zwischengespeichert. Im Schritt 69 wird zwischen dem Startpunkt und dem Endpunkt mathematisch eine Gerade gelegt und im Schritt 70 wird der Abstand des dazwischenliegenden Stützpunktes zu der Geraden gemessen. Dieser Abstand wird im Schritt 71 mit einer Schranke verglichen, die im Beispielsfall mit 10 m vorgegeben ist. Ist der ermittelte Abstand des mittleren Stützpunktes nicht größer als der Betrag der Schranke, so wird zwischen dem Start- und End-punkt der Geraden eine Glättung vorgenommen, indem jetzt im Schritt 72 der mittlere Stützpunkt gelöscht wird und der Endpunkt im Schritt 73 als neuer Startpunkt verwendet wird. Ist dagegen der ermittelte Abstand des mittleren Stützpunktes - wie im Beispielsfall nach Figur 16 - größer als die vorgegebene Schranke, so wird der mittlere Stützpunkt im Schritt 74 als neuer Startpunkt zwischengespeichert. Im Schritt 75 wird nun geprüft, ob neben den bereits erfaßten drei Stützpunkten noch weitere Stützpunkte für die Straßenabbildung vorhanden sind. Ist dies - wie im Beispiel - der Fall, so wird über eine Programmschleife 76 der neue Startpunkt im Schritt 66 wieder zwischengespeichert und der beschriebene Vorgang in den Schritten 66 - 75 wiederholt sich nun so lange, bis im Schritt 75 kein weiterer Stützpunkt der Straße mehr gefunden wird. Im Schritt 77 werden nun der erste Startpunkt, der letzte Endpunkt und die dazwischenliegenden Start- und Endpunkte als Stützpunkte für eine nunmehr geglättete Straßenabbildung ausgegeben und im Schritt 78 wird in das Hauptprogramm nach Figur 1 zurückgesprungen.

In dem Beispielsfall nach Figur 16 wurde bei einer Schranke von 10 m kein Stützpunkt mehr gefunden, der eine Reduzierung der Stützpunktzahl durch das Glättungsverfahren nach Figur 17 ermöglicht hätte. Dies ist in erster Linie darauf zurückzuführen, daß der reale Verlauf der Straße 23 stark verwinkelt ist. Bei anderen Straßenverläufen können aber durch dieses Glättungsverfahren noch einige Stützpunkte eingespart werden.

Ausgehend von der artfremden Datensammlung werden mit den beschriebenen Verfahrensabschnitten für eine Straßennetzabbildung zu Navigationszwecken einerseits genügend relevante Daten für die Abbildung der Straßen ermittelt und in einem Datenspeicher für Navigationszwecke abgespeichert, so daß ein durch Straße und Hausnummer angegebenes Ziel von einem Fahrzeug mit einer Koppelnavigation aufzufinden ist. Andererseits werden die von der artfremden Datensammlung entnommenen Daten durch die beschriebenen Verfahrensabschnitte derart durch Mittelung bzw. Schwerpunktbildung, Linearisierung und Glättung selektiert, daß damit unter Berücksichtigung von Datenschutzbestimmungen auf vorhandene Datensammlungen zurückgegriffen werden kann.

Das aus der WO 86/07142 bekannte Navigationssystem im Kraftfahrzeug ist für die Verwendung von Straßennetzabbildungen in einem Datenspeicher, die nach dem zuvor beschriebenen Verfahren aus einer artfremden Datensammlung gewonnen wurden, nicht geeignet. Es ist so zu erweitern bzw. abzuändern, daß die Speicherung des Startpunktes und der Zielpunkte einer zu durchfahrenden Strecke durch Eingabe der diesen Punkten entsprechenden Straße und Hausnummer vorgenommen werden kann.

Notwendig ist eine Eingaberoutine, welche alternativ zur bekannten Eingabe von Entfernung und Winkel zum Zielpunkt aufgerufen werden kann. Dieser Routine fällt die Aufgabe zu, aus den einzugebenden Werten für die Straße und Hausnummer der Start- und Zielpunkte für die Navigation geeignete Daten zu ermitteln. Dieses geschieht mit Hilfe von reduzierten Stadtplandaten in Form von Straßenstützpunkten, welche dem System als Datenbasis in einem Datenspeicher wie ROM, Diskette, CD-Platte, Kassette oder dergleichen zur Verfügung stehen müssen.

Um den Speicherbedarf für die Stadtplandaten in erträglichen Grenzen zu halten, wird auf die Klartexteingabe des Straßennamens verzichtet. Vielmehr werden die Straßen anhand einer ihnen zugeteilten Kennungsnummer identifiziert, welche aus einer Liste entnommen werden kann. Eine solche Liste ist als Software dem Navigationssystem des Fahrzeugs beigefügt. Die den Straßen zugeteilten Kennungsnummern können dabei unmittelbar aus der Datei von Vermessungsämtern übernommen werden. Wird dagegen die Liste der Straßennamen mit der Kennungsnummer zusammen mit der Straßennetzabbildung in einem Datenspeicher des Navigationssystems abgelegt, so kann bei der Eingabe von Start- und Zielpunkten der Straßenname über Klartexteingabe aufgerufen werden. Die entsprechende Kennungsnummer wird dann vom Navigationssystem aus der gespeicherten Liste bzw. Datei ermittelt.

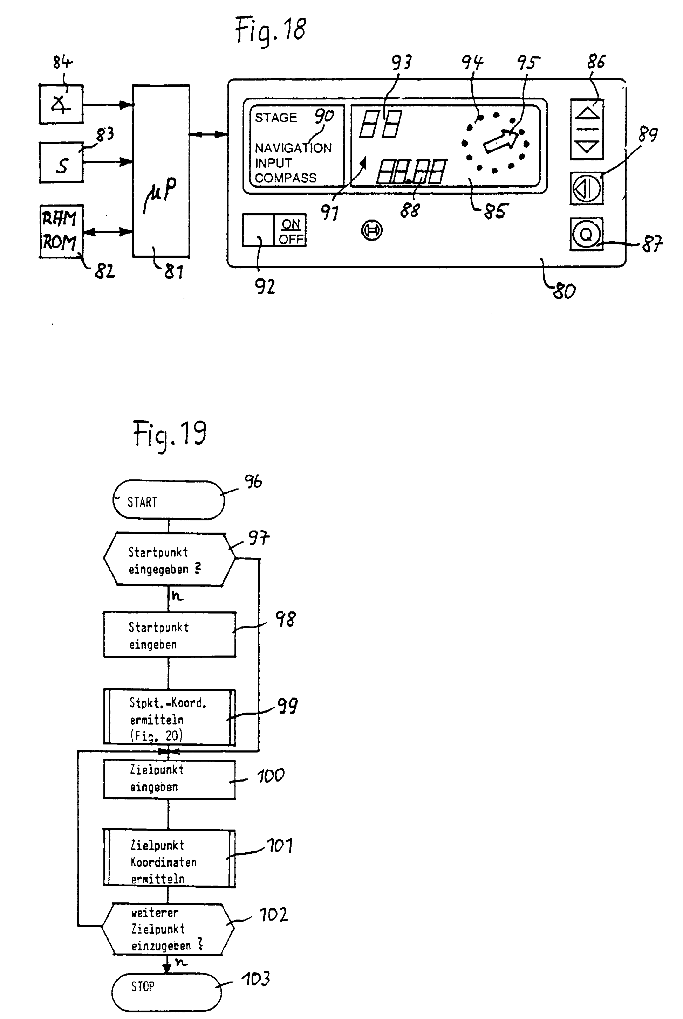

Figur 18 zeigt das Navigationssystem für ein Kraftfahrzeug, an dem für eine Zielfindungsnavigation Start- und Zielpunkte eingegeben werden können. Es besteht aus einer Eingabe- und Ausgabeeinheit 80, einem Mikroprozessor 81 mit einem Datenspeicher 82 sowie aus einem Weggeber 83 und einem Fahrrichtungsgeber 84. Der Mikroprozessor 81 verarbeitet die vom Weggeber 83, Richtungsgeber 84 sowie die von Bedientasten der Eingabe- und Ausgabeeinheit 10 kommenden Daten und steuert ferner die Ausgabe von Daten und Richtungspfeilen auf einer Flüssigkristallanzeige 85 der Einheit 10. Die Bedienung des Navigationssystems erfolgt mit fünf Bedientasten. Mit einer Wippentaste 86 können Zahlenwerte in Richtung größer und kleiner auf der LCD 85 verändert werden. Mit der Betätigung einer Quittiertaste 87 wird jeweils der auf der LCD 85 angezeigte aktuelle Zahlenwert abgespeichert, der im unteren Bereich der LCD 85, z. B. auf einer vierstelligen Sieben-Segment-Anzeige 88 erscheint. Mit einer Funktionswahltaste 89 erfolgt die Umschaltung des Navigationssystems innerhalb eines angebotenen Menüs, gemäß einer Beschriftung 90 auf dem linken Randbereich der Einheit 80, wobei die jeweils auf der LCD 85 angezeigten Informationen durch einen Pfeil 91 der LCD 85 in Höhe der Beschriftung 90 kenntlich gemacht werden. Ein weiterer Tastschalter 92 dient zum Ein- und Ausschalten des Navigationssystems. Eine zweistellige Sieben-Segment-Anzeige 93 im oberen LCD-Bereich dient zur Kennzeichnung von 99 verschiedenen Zielvorgaben bzw. Etappen. Eine Rosette 94 der LCD 85 mit 16 verschiedenen unsichtbaren Pfeilelementen dient zur Richtungsinformation, wobei der angesteuerte Richtungspfeil 95 entweder die Nordrichtung oder die Richtung des anzufahrenden Zieles darstellt. Anstelle der Wippentaste 86 kann auch eine Tastatur für die Zahleneingabe verwendet werden.

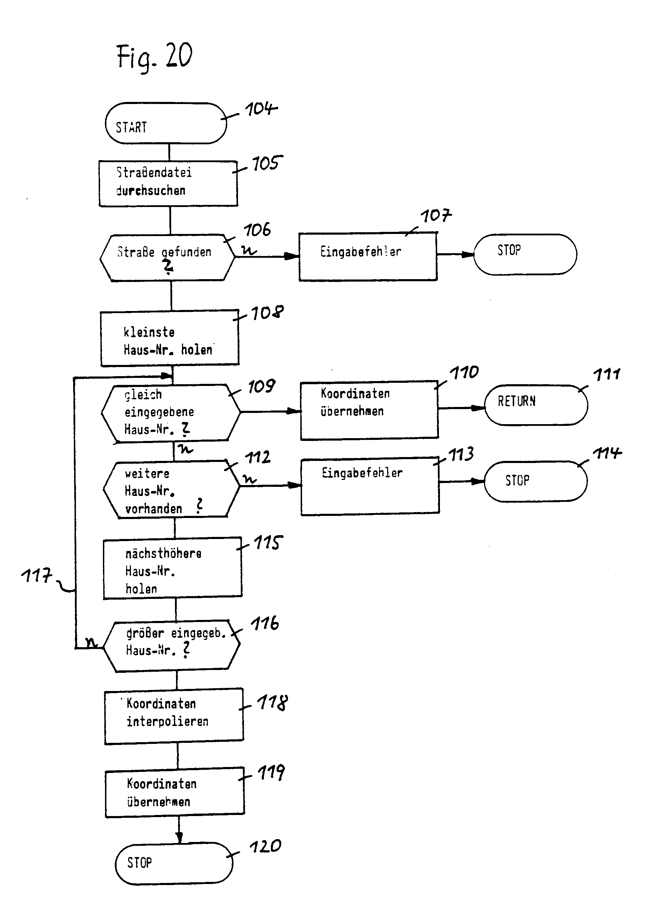

Die Eingabe von Start- und Zielpunkt soll nun mit Hilfe der Flußdiagramme nach Figur 19 und 20 näher erläutert werden. Nach dem Einschalten des Navigationssystems durch den Tastschalter 92 wird über den Wahlschalter 89 das Menü INPUT angewählt, in dem die Auswahltaste 89 so oft gedrückt wird, bis der Zeiger 91 am linken Display-Rand auf "INPUT" zeigt. Mit einem kurzen Drücken der Quittiertaste 87 wird die aus der WO 86-07142 bekannte übliche Eingabe von Strecke und Winkel gegen Norden zwischen Start- und Zielpunkt aufgerufen. Um zur Eingaberoutine für Straßen- und Hausnummern zu gelangen, muß die Quittiertaste 87 ca. 2 Sekunden gedrückt gehalten werden, bis auf der LCD 85 die Etappennummer 93 zu blinken beginnt. Nun ist der gewünschte Eingabemodus angewählt. Mit der Wippe 86 kann nun die zu programmierende Etappennummer verändert werden. Wird die gewünschte Etappe angezeigt, kann durch Drücken der Quittiertaste 87 die Programmierung begonnen werden. Durch Drücken der Auswahltaste 89 kann die Eingabe jederzeit abgebrochen werden, es erscheint dann das Menü "NAVIGATION".

Gemäß Figur 19 wird nach dem Start 96 der Eingaberoutine im Schritt 97 festgestellt, ob die Programmierung neu begonnen oder erstmals durchgeführt wird. Für diesen Fall verlangt das System zunächst im Schritt 98 die Eingabe eines Startpunktes. Im Gegensatz zur Programmierung unter Verwendung von Strecke und Winkel zum Ziel ist die Eingabe eines Startpunktes nötig, um einen Bezugspunkt für die Koordinaten zu erhalten, von dem ausgehend das System die rechtwinkligen Koordinaten aus der Datei in Polarkoordinaten umrechnen kann. Wird die Quittiertaste 87 gedrückt, erscheint auf der Anzeige 88 der Text "Straße", womit das System zur Eingabe der Straßennummer auffordert. Zur Eingabe der Straßennummer muß nun wieder die Quittiertaste 87 gedrückt werden. Das Navigationssystem gibt nun aus dem Datenspeicher 82 mit der Straßennetzabbildung die niedrigste in der Datei enthaltene Straßennummer vor. Mit der Wippe 86 läßt sich die gewünschte Straßennummer einstellen. Ist dies geschehen, muß der Vorgang durch Drücken der Quittiertaste 87 beendet werden. Die Eingabe der Hausnummer erfolgt nun in gleicher Weise. Die niedrigste, in der aufgerufenen Straße vorhandene Hausnummer wird zunächst vorgegeben und kann mit der Wippe 86 verändert werden. Das System erlaubt nur Hausnummern, welche zwischen der niedrigsten und der höchsten gespeicherten Hausnummer der aufgerufenen Straße liegen, so daß in jedem Fall die Interpolation der Koordinaten aus den Daten der gespeicherten Stützpunkte mit den ihnen zugeordneten Hausnummern möglich ist.

Ist die richtige Hausnummer eingestellt, muß dies durch Drücken der Quittiertaste 87 bestätigt werden. Danach folgt im Schritt 99 mit einem Unterprogramm nach Figur 20 eine Umrechnung der eingegebenen Daten des Startpunktes in die Koordinaten des Startpunktes, was weiter unten erläutert wird. Nach der Starteingabe fordert das Navigationssystem im Schritt 100 zur Eingabe eines Zielpunktes auf. Dabei wird genau so wie bei der Starteingabe vorgegangen und im Schritt 101 werden die Koordinaten des Zielpunktes mit dem Unterprogramm nach Figur 20 ermittelt und abgespeichert. Im Schritt 102 wird sodann geprüft, ob noch weitere Zielpunkte für weitere Etappen eingegeben werden sollen. Durch Drücken der Auswahltaste 89 im Schritt 103 kann die Eingabe beendet werden. Durch Drücken der Quittiertaste 87 können weitere Zieleingaben begonnen werden.

Figur 20 zeigt das Flußdiagramm zur Ermittlung der Koordinaten der eingegebenen Start- und Zielpunkte. Nach dem Start 104 des Unterprogramms wird im Schritt 105 die im Datenspeicher 82 abgelegte Datei der Straßennetzabbildung nach der eingegebenen Straßenkennung oder ggf. nach dem eingegebenen Straßennamen durchsucht. Im Schritt 106 wird festgestellt, ob die Straße gefunden wurde. Falls nicht, wird dies im Schritt 107 über die LCD 85 angezeigt und die Eingabe wird abgebrochen. Sie kann gemäß Figur 19 wiederholt werden. Wurde die Straße gefunden, wird im Schritt 108 aus der Datei die kleinste Hausnummer der gespeicherten Stützpunkte dieser Straße aufgerufen und im Schritt 109 mit der eingegebenen Hausnummer verglichen. Stimmen die Hausnummern überein, so werden die Koordinaten des gefundenen Stützpunktes als Start- bzw. Zielkoordinaten in einen überschreibbaren Teil im Datenspeicher 82 des Navigationssystems übernommen. Im Schritt 111 wird nun eine neue Eingabe angefordert. Stimmen die Hausnummern nicht überein, wird im Schritt 112 nach weiteren Hausnummern gesucht. Falls in der Datei keine weiteren Stützpunkt-Hausnummern mehr gefunden werden, wird im Schritt 113 dies auf der LCD 85 angezeigt und im Schritt 114 wird die Eingabe abgebrochen. Sie kann gemäß Figur 19 wiederholt werden. Wurden jedoch weitere Hausnummern gefunden, wird im Schritt 115 die nächsthöhere Hausnummer aufgerufen und mit der eingegebenen Hausnummer im Schritt 116 verglichen. Ist diese noch nicht größer als die eingegebene Hausnummer, so springt das Programm über eine Schleife 117 auf Schritt 109 zurück und prüft, ob jetzt Übereinstimmung vorliegt oder ob noch weitere Hausnummern in der Datei stehen.

Dieser Vorgang wird so lange wiederholt, bis die im Schritt 115 aufgerufene Hausnummer mit der eingegebenen Hausnummer übereinstimmt oder größer als diese ist. Im letzteren Fall liegt der eingegebene Start- oder Zielpunkt zwischen den zwei zuletzt aufgerufenen Stützpunkten der Straße. Im Schritt 118 müssen jetzt die Koordinaten des Start- bzw. Zielpunktes durch lineares Interpolieren zwischen den Koordinaten der zwei zuletzt aufgerufenen und zwischengespeicherten Stützpunkte entsprechend der Differenz ihrer Hausnummern ermittelt werden. Die so ermittelten Koordinaten werden im Schritt 119 der Hausnummer des Start- bzw. Zielpunktes zugeordnet und im überschreibbaren Teil des Datenspeichers 82 zur Navigation übernommen. Mit Schritt 120 erfolgt nun der Rücksprung in das Flußdiagramm nach Figur 19.

Dieses Unterprogramm wird sowohl für die Eingabe des Startpunktes als auch für die Eingabe eines oder mehrerer Zielpunkte in gleicher Weise durchlaufen. Dabei ist unerheblich, ob als Start- oder Zielpunkt eine Hausnummer an einer Straße oder an einem Platz eingegeben wird.

Nach der Eingabe von Start- und Zielpunkt ermittelt nun das Navigationssystem mit Hilfe der dem Datenspeicher entnommenen oder durch Interpolation ermittelten Koordinaten des eingegebenen Start- und Zielpunktes einen Zielvektor durch Substraktion der Koordinaten des Start- und Zielpunktes. Dieser Zielvektor wird in Polarkoordinaten auf der LCD 85 angezeigt, wobei der Richtungspfeil 95 die Richtung zum Zielpunkt anzeigt und die Anzeige 88 die direkte Entfernung zwischen Start- und Zielpunkt angibt. Während der Navigationsfahrt wird nun mit Hilfe der bekannten Koppelnavigation der jeweilige Standort des Fahrzeugs ermittelt und der Zielvektor wird dabei in bekannter Weise für eine Zielfindungsnavigation vom jeweiligen Standort des Fahrzeugs aus ermittelt und angezeigt.

## Patentansprüche

1. Verfahren zur Eingabe von Start- und Zielpunkten in elektronischen Navigationssystemen für Fahrzeuge, bei denen in einem Datenspeicher relevante Daten von Straßennetzabbildungen abgelegt sind, welche eine Straßenkennung sowie die Koordinaten von Stützpunkten der Straßen enthalten, denen jeweils eine Hausnummer zugeordnet ist, dadurch gekennzeichnet,
a) daß bei jeder Eingabe eines Start- oder Zielpunktes in das Navigationssystem nacheinander die Straßenkennung (105) und die Hausnummer (108) des Start- oder Zielpunktes eingegeben wird,
b) daß zunächst der Datenspeicher (82) nach der eingegebenen Straßenkennung (105) durchsucht wird,
c) daß danach die Hausnummer der im Datenspeicher (82) gespeicherten Stützpunkte (24) der gefundenen Straße mit der eingegebenen Hausnummer (109) verglichen werden,
d) daß bei Übereinstimmung der eingegebenen Hausnummer mit der Hausnummer eines im Datenspeicher (82) vorhandenen Stützpunktes (24) dessen Koordinaten in einen überschreibbaren Speicher des Navigationssystems (110) übergeben werden,
e) daß bei Abweichung der eingegebenen Hausnummer von den Hausnummern der im Datenspeicher (82) vorhandenen Stützpunkte (24) die Daten der Stützpunkte mit den der eingegebenen Hausnummer benachbarten Hausnummern (116) zwischengespeichert werden
f) und daß durch Interpolation der Koordinaten der Stützpunkte (24) mit den benachbarten Hausnummern (118) die Koordinaten des eingegebenen Start- oder Zielpunktes entsprechend der Differenz der Hausnummern ermittelt und in den überschreibbaren Speicher übergeben werden.

2. Verfahren nach Anspruch 1, dadurch gekennzeichnet, daß die Straßenkennung aus einer Zahl besteht, die in einer das Straßenverzeichnis der Straßennetzabbildung enthaltenen Datei des Datenspeichers (82) abgelegt ist.

3. Verfahren nach Anspruch 1 oder 2, dadurch gekennzeichnet, daß aus den vom Navigationsrechner ermittelten Koordinaten von Start- und Zielpunkt durch Subtraktion ein Zielvektor ermittelt und vom Navigationssystem angezeigt wird.

4. Verfahren nach Anspruch 3, dadurch gekennzeichnet, daß der ermittelte Zielvektor in Polarkoordinaten umgerechnet und durch eine Zielanzeige (95) und eine Entfernungsanzeige (88) angezeigt wird.

## Claims

1. Method for entering start and destination points in electronic navigation systems for vehicles, in which relevant data of street network representations are stored in a data memory, which street network representations contain a street code as well as the coordinates of base points of the street to which a house number is assigned in each case, characterised
a) in that for each input of a start of destination point into the navigation system, the street code (105) and the house number (108) of the start or destination point are successively entered,
b) in that first of all the data memory (82) is searched for the street code (105) entered,
c) in that after that the house numbers of the base points (24) of the street found and stored in the data memory (82) are compared with the input house number (109),
d) in that when the input house number matches the house number of a base point (24) present in the data memory (82), its coordinates are transferred into an erasable memory of the navigation system (110),
e) in that if the input house number differs from the house numbers of the base points (24) present in the data memory (82), the data of the base points with the house numbers (116) adjacent to the input house number are temporarily stored,
f) and in that the coordinates of the input start or destination point are now calculated in accordance with the difference of the house numbers by interpolation of the coordinates of the base points (24) with the adjacent house numbers (118) and are transferred into the erasable memory.

2. Method according to Claim 1, characterised in that the street code consists of a number which is stored in a file of the data memory (82) containing the street directory of the street network representation.

3. Method according to Claim 1 or 2, characterised in that a target vector is calculated from the coordinates of start and destination points calculated by the navigation computer by means of subtraction and is displayed by the navigation system.

4. Method according to Claim 3, characterised in that the calculated target vector is converted into polar coordinates and is indicated by a destination display (95) and a distance display (88).

## Revendications

1. Procédé d'introduction des points de départ et de destination dans des systèmes de navigation électroniques pour des véhicules, selon lequel on inscrit dans une mémoire de données, les données caractéristiques de l'image d'un réseau de rues, données qui contiennent une référence de rue ainsi que les données des points de repère des rues, auquel est chaque fois associé un numéro d'immeuble, caractérisé en ce que,
a) pour chaque introduction d'une point de départ ou de destination dans le système de navigation on introduit successivement le repère de rue (105) et le numéro d'immeuble (108) du point de départ ou de destination,
b) on examine tout d'abord la mémoire de données (82) après l'introduction de la référence de rue (105),
c) ensuite, on compare le numéro d'immeuble des points de repère (24) enregistrés dans la mémoire de données (82) correspondant à la rue trouvée et le numéro d'immeuble introduit (109),
d) en cas de coïncidence entre le numéro d'immeuble introduit et le numéro d'immeuble d'un point de repère (24) existant dans la mémoire de données (82), les coordonnées passent dans une mémoire vive du système de navigation (110),
e) en cas de différence entre le numéro d'immeuble introduit et le numéro d'immeuble du point de repère (24) trouvé dans la mémoire de données (82), on enregistre les données des points de repère et des numéros d'immeuble (116) voisins du numéro d'immeuble introduit, et
f) par interpolation des coordonnées des points de repère (24) et des numéros d'immeuble (118) voisins, on détermine les coordonnées du point de départ ou de destination introduits, correspondant à la différence des numéros d'immeuble, et on inscrit dans la mémoire effaçable.

2. Procédé selon la revendication 1, caractérisé en ce que la référence d'une rue se compose d'un nombre, qui est classé dans un fichier de la mémoire de données 82 contenant la liste des rues de l'image du réseau de rue.

3. Procédé selon la revendication 1 ou 2, caractérisé en ce qu'à partir des coordonnées du point de départ et du point de destination obtenues par le calculateur de navigation, on détermine par soustraction, un vecteur de destination et on l'affiche par le système de navigation.

4. Procédé selon la revendication 3, caractérisé en ce que le vecteur de destination obtenu est transformé en coordonnées polaires et est affiché par un affichage de destination (95) et par un affichage d'éloignement (88).
